**Europäisches Patentamt**

(19) **European Patent Office**

**Office européen des brevets**

(11) Veröffentlichungsnummer: **0 052 093 B1**

# EUROPÄISCHE PATENTSCHRIFT

(45) Veröffentlichungstag der Patentschrift:
16.01.85

(51) Int. Cl.⁴: **C 04 B 35/04,** C 01 F 5/10

(21) Anmeldenummer: **81890174.6**

(22) Anmeldetag: **21.10.81**

(54) **Verfahren zur Herstellung von Sintermagnesia.**

(30) Priorität: **07.11.80 AT 5492/80**

(43) Veröffentlichungstag der Anmeldung:
**19.05.82 Patentblatt 82/20**

(45) Bekanntmachung des Hinweises auf die Patenterteilung:
**16.01.85 Patentblatt 85/3**

(84) Benannte Vertragsstaaten:
**AT DE FR GB IT**

(56) Entgegenhaltungen:
**AT - B - 347 403
DE - A - 2 608 567
GB - A - 1 426 567
GB - A - 1 483 970
US - A - 2 413 292**

(73) Patentinhaber: **Veitscher
Magnesitwerke-Actien-Gesellschaft,
Schubertring 10-12, A-1010 Wien (AT)**

(72) Erfinder: **Grohmann, Helmut, Dr., Schiffgasse 5,
A-8600 Bruck an der Mur (AT)**
Erfinder: **Stadler, Peter, Erhardstrasse 369, A-8614 St.
Jakob bei Mixnitz (AT)**

(74) Vertreter: **Pawloy, Heinrich, Dr. et al, Riemergasse 14,
A-1010 Wien (AT)**

# Beschreibung

Die Erfindung bezieht sich auf ein Verfahren zur Herstellung von Sintermagnesia aus Magnesiumoxid, welches seinerseits durch thermische Zerlegung einer Magnesiumchloridsole gebildet wird, die ihrerseits durch Lösen magnesiumhaltiger Ausgangsstoffe in Salzsäure und anschliessendes Aufarbeiten der durch den Löseprozess gebildeten Magnesiumchloridtrübe bereitet wird.

Geht man bei der Herstellung von Sintermagnesia, um ein Produkt zu erhalten, welches möglichst wenig unerwünschte Verunreinigungen bzw. Beimengungen enthält, von einem Magnesiumoxid aus, welches seinerseits durch thermische Zerlegung einer zuvor durch Aufarbeiten von Magnesiumchloridtrübe von Verunreinigungen befreiten Magnesiumchloridsole gebildet wurde, so ergibt sich, dass bei dieser Sinterung ein Abgas entsteht, welches Chlorwasserstoff und Schwefeldioxid, sowie gegebenenfalls auch Schwefeltrioxid, in Mengen enthält, die bei unmittelbarem Ablassen in die Atmosphäre eine unerwünschte bzw. unzulässige Umweltbelastung hervorrufen würden. Ein Teil des Schwefeldioxids entstammt dabei der für den Sinterprozess nötigen Feuerung, während das übrige von dem der thermischen Zerlegung der Magnesiumchloridsole vorangehenden Aufschluss und von der im Rahmen des Aufarbeitens der Sole durchgeführten Reinigungsprozesse herrührt und eigentlich unerwünscht in das zu sinternde Magnesiumoxid gelangt ist. Bei diesem Aufarbeiten der Magnesiumchloridtrübe, bei dem aus dieser Verunreinigungen ausgefällt und abgetrennt werden, wird ja häufig der Trübe zum Ausfällen von Calcium in Form von Calciumsulfat eine Sulfationen gebende Substanz zugesetzt.

Es wurde bereits vorgeschlagen, die beim Sintern von Magnesitmaterial, also einem Material, das im wesentlichen aus natürlichem Magnesiumcarbonat besteht, entstehenden Abgase, die in der Regel neben staubförmigem Magnesiumoxid Schwefelverbindungen enthalten, die teils von der Befeuerung des Sinterofens und teils vom Bindemittel herrühren, mit dem das zu sinternde Material gebunden wird, mittels Wasser zu waschen, wobei das Magnesiumoxid im Waschwasser suspendiert wird und mit den in den Abgasen vorhandenen Schwefelverbindungen reagiert, sodass diese aus den Abgasen entfernt werden. Es ist dabei eine mehrstufige Prozessführung nötig, um aus den Schwefelverbindungen, die in den Abgasen vorliegen, eine in der Magnesittechnik brauchbare Substanz, nämlich Magnesiumsulfat, herzustellen, und damit eine blosse Verlagerung des Abgasproblems zu einem Gewässer- oder Deponierproblem zu vermeiden.

Die Anwendung dieses bekannten Auswaschens von Abgasen auf ein Verfahren der eingangs erwähnten Art würde bei Zugrundelegung einer ausreichenden Reinigung der Abgase Waschflüssigkeiten ergeben, in denen der Chlorwasserstoff und die Schwefelverbindungen in sehr verdünnter Form vorliegen, sodass das Recycling derselben einen unwirtschaftlichen hohen Energieaufwand zur Folge hätte.

Es ist auch aus der DE-A1 2 608 567 ein Verfahren bekannt, bei dem eine wässerige Magnesiumchloridlösung, welche Calciumchlorid enthält, einer thermischen Zerlegung unterworfen wird, wobei calciumchloridhaltiges Magnesiumchlorid entsteht. Zur Entfernung des Calciumchlorids wird dieses Magnesiumoxid mit Wasser gewaschen und man erhält solcherart Magnesiumhydroxid, welches dann durch Kalzinieren und/oder Sintern in gebrannte Magnesia bzw. Sintermagnesia übergeführt wird. Bei diesem bekannten Verfahren wird die Magnesiumchloridlösung in die heissen Abgase des Kalzinier- und/oder Sinterofens eingebracht, um die fühlbare Wärme dieser Abgase zu nützen und damit die Konzentration der Magnesiumchloridlösung zu erhöhen.

Es ist nun ein Ziel der vorliegenden Erfindung, ein Verfahren der eingangs erwähnten Art zu schaffen, mit dem auf apparativ einfache und energetisch günstige Weise die aus Gründen der Umweltbelastung störenden Anteile des Abgases aus diesem entfernt und einem nützlichen Recycling zugeführt werden können.

Die Erfindung ist bei einem Verfahren der eingangs erwähnten Art dadurch gekennzeichnet, dass das Abgas des Sinterofens vor dem Ableiten in die Umgebung einer reinigenden Wäsche mit einer suspendiertes $Fe(OH)_3$ enthaltenden Magnesiumchloridtrübe unterworfen wird, die der zur Bereitung der Magnesiumchloridsole dienenden Mengen an Magnesiumchloridtrübe entnommen wird, und dass die gebrauchte Waschtrübe wieder der zur Bereitung der Magnesiumchloridsole dienenden Menge aus Magnesiumchloridtrübe beigegeben wird.

Durch diese Vorgangsweise kann der vorstehend angeführten Zielsetzung sehr gut entsprochen werden, und es werden die im Abgas Schadstoffe darstellenden Komponenten desselben in einer sehr einfachen, einstufigen Wäsche ausgewaschen und ohne Wasserballast und ohne dass eine weitere Aufbereitung oder Zwischenlagerung erforderlich wäre, dem chemischen Aufbereitungsprozess zugeführt, der der Herstellung des zu sinternden Materials dient. Hiebei fördert die Anwesenheit von suspendiertem $Fe(OH)_3$ in der Magnesiumchloridtrübe die Reinigungswirkung und insbesondere die Umwandlung von Schwefeldioxid, welches von der als Waschflüssigkeit verwendeten Magnesiumchloridtrübe aus den Abgasen des Sinterofens aufgenommen wurde, in Schwefeltrioxid, aus dem durch Umlagerung in der Magnesiumchloridtrübe Sulfationen entstehen, welche die in der Regel unerwünschten Calciumionen aus der Magnesiumchloridtrübe oder aus der aus dieser gebildeten Magnesiumchloridsolde ausfällen. Das sich bei der erfindungsgemässen Vorgangsweise ergebende Recycling verbessert auch die Stoffbilanz des chemichen Aufbereitungsprozesses.

Die beim erfindungsgemässen Verfahren als Waschflüssigkeit eingesetzte Magnesiumchloridtrübe ist durch die in ihr enthaltenen Stoffe, insbesondere Magnesiumoxid und Magnesiumhydroxid, so stark abgepuffert, dass sich ihr pH-Wert durch die Absorption von Chlorwasserstoff, Schwefeldioxid und Schwefeltrioxid kaum ändert, und es wird dadurch möglich, Chlorwasserstoff und die Schwefeloxide in nur einer Waschstufe weitestgehend abzuscheiden.

Soferne der für das erfindungsgemässe Verfahren vorgesehene Gehalt der zum Waschen des Abgases verwendeten Magnesiumchloridtrübe an Fe(OH)$_3$ nicht schon vom Ausgangsmaterial her, welches mit Salzsäure aufgeschlossen wird, vorliegt, kann auch zur Bildung des Fe(OH)$_3$ dem Ausgangsmaterial oder der Magnesiumoxidtrübe eine entsprechende Menge an Eisen oder einer geeigneten Eisenverbindung zugesetzt werden.

Um den zur Oxidation notwendigen Sauerstoff zuzuführen, wird vorteilhaft in die zum Waschen des Abgases vorgesehene Magnesiumchloridtrübe Luft eingeblasen. Man kann aber auch Luft in die bereits gebrauchte Waschtrübe bzw. in die zur Bereitung der Magnesiumchloridsole dienende Menge an Magnesiumchloridtrübe, der die gebrauchte Waschtrübe beigegeben wird, einleiten.

Es hat sich ergeben, dass es besonders vorteilhaft ist, zum Waschen eine Magnesiumchloridtrübe mit einem zwischen 10 und 70 g/l liegenden Gehalt an frisch gefälltem Fe(OH)$_3$ zu verwenden. Hiezu ist zu erwähnen, dass frisch gefälltes Fe(OH)$_3$ die Aufoxidation von Schwefeldioxid zu Schwefeltrioxid besonders fördert.

Eine sehr einfache Verfahrensführung, verbunden mit einer guten Wirksamkeit der Abgaswäsche wird erhalten, wenn man zum Waschen des Abgases eine Magnesiumchloridtrübe verwendet, der bereits zum Herstellen eines für das Ausfällen der Verunreinigungen günstigen pH-Wertes eine die Acidität der Trübe vermindernde Substanz zugesetzt worden ist, in der die Verunreinigungen aber noch enthalten sind. Hiebei ergibt sich eine besonders einfache und apparativ günstige Vorgangsweise, sowie ein hinsichtlich des Einbringungszeitpunktes der aus den Abgasen wiedergewonnenen Stoffe in den für die Bereitung der Magnesiumchloridsole vorgesehenen Arbeitsgang günstiger Prozessablauf, wenn man die zum Waschen des Abgases dienende Magnesiumchloridtrübe dem zum Fällen der Verunreinigungen dienenden Behälter entnimmt und nach Gebrauch wieder in diesen Behälter rückführt.

Es ist weiter für die Fällung der üblicherweise in der Magnesiumchloridtrübe vorliegenden Verunreinigungen und für eine möglichst vollkommene Abgaswäsche günstig, wenn man den pH-Wert der zum Waschen des Abgases vorgesehenen Magnesiumchloridtrübe auf einen zwischen 3,5 und 7 liegenden Wert einstellt.

Das zu waschende Abgas des Sinterofens kann vor dem Waschprozess entstaubt werden. Eine solche Entstaubung kann aber auch entfallen, weil der nach der Erfindung zum Auswaschen des Chlorwasserstoffs und der Schwefeloxide dienende Wäscher gleichzeitig als Entstauber wirkt. Der ausgewaschene Staub dient dann als Fällungsmittel für das Eisen und ähnliche Verunreinigungen des Ausgangsmaterials, sodass durch diese nasse Entstaubung auch eine Ersparnis an zuzusetzenden Fällungsmitteln erreicht werden kann.

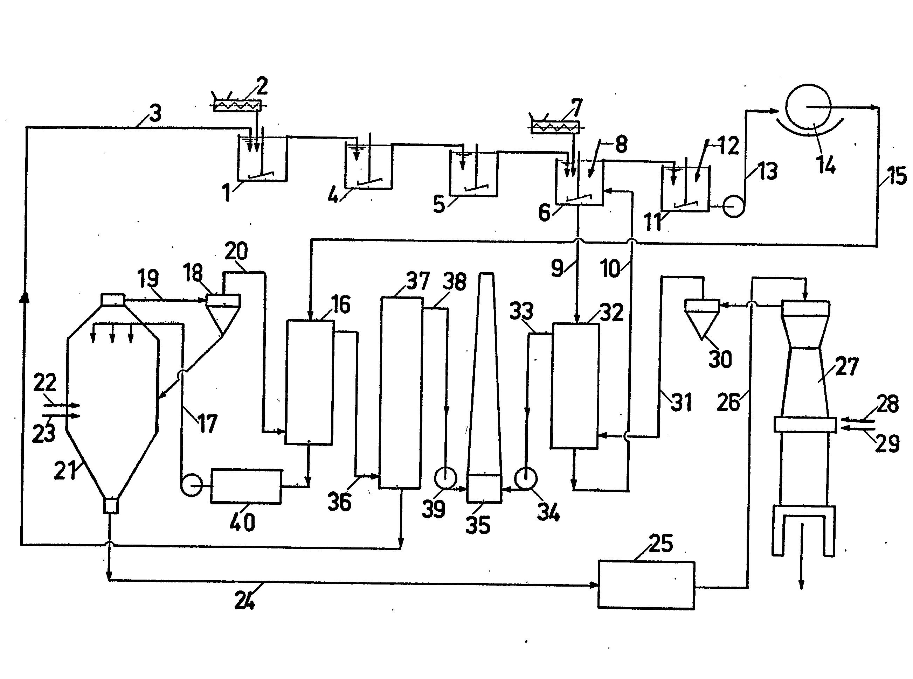

Die Erfindung wird nun nachstehend unter Bezugnahme auf eine in der Zeichnung schematisch dargestellte Anlage, die zur Durchführung des erfindungsgemässen Verfahrens vorgesehen ist, und unter Bezugnahme auf Beispiele weiter erläutert.

Die in der Zeichnung dargestellte Anlage weist einen ersten Mischbehälter 1 auf, der über eine Leitung 3 mit Salzsäure und über eine Dosiervorrichtung 2 mit zerkleinertem, magnesiumhaltigem Ausgangsmaterial, z.B. gemahlenem Rohmagnesit oder Rohserpentin, beschickt werden kann. Das Ausgangsmaterial wird dabei durch die Salzsäure aufgeschlossen, wobei der im Behälter 1 begonnene Aufschliessprozess in zwei weiteren Behältern 4 und 5 fortgesetzt und praktisch beendet wird.

Die Behälter 4 und 5 sind dabei ebenso wie der Behälter 1 mit einem Rührwerk ausgestattet. Vom Behälter 5 gelangt die solcherart entstandene Magnesiumchloridtrübe in einen weiteren Behälter 6, an dem eine Dosiervorrichtung 7 für die Zugabe des Fällungsmittels vorgesehen ist. Weiters ist dieser Behälter 6 mit einem Rührwerk und mit einer Leitung 8 für das Einleiten von Pressluft in die im Behälter 6 befindliche Magnesiumchloridtrübe ausgestattet. Über eine Verbindungsleitung gelangt die Magnesiumchloridtrübe vom Behälter 6 in einen Behälter 11, der ebenfalls mit einem Rührwerk und einer Luftzufuhr 12 versehen ist und in dem die Fällungsreaktion fortgesetzt wird. Vom Behälter 11 wird die Trübe mittels einer Pumpe und einer Leitung 13 zum Filter 14 gefördert, wo die durch die Zugabe des Fällungsmittels in den Behältern 6 und 11 ausgefällten Verunreinigungen abgetrennt werden. Vom Filter 14 gelangt die Magnesiumchloridsole über eine Leitung 15 in einen Wärmetauscher 16, der als Gaswäscher ausgebildet ist. Die aus dem Wärmetauscher 16 abgelaufene, konzentrierte Magnesiumchloridsole kann bei Bedarf durch Zufuhr von Sulfationen (etwa durch Zugabe von Magnesiumsulfat) in der Fällungs- und Abtrennungsstation 40 von unerwünschten Calciumionen befreit werden, wie dies in der AT-B 347 403 beschrieben ist. Im Falle der Abwesenheit von Calciumionen können in der gleichen Fällungs- und Abtrennungsstation 40 unerwünschte Sulfationen (z.B. aus der Rauchgaswäsche) durch Zusatz von Calciumionen (etwa als Calciumchlorid) als Calciumsulfat gefällt und entfernt werden.

Über eine Leitung 17 wird die gereinigte, konzentrierte Magnesiumchloridsole in einen von Brennern 22 und 23 beheizten Ofen 21 gefördert, in welchem aus dieser Sole durch thermischer Zerlegung Magnesiumoxid gebildet wird, welches an der Unterseite des Ofens 21 ausgetragen wird. Es entsteht bei dieser thermischen Zerlegung ausser dem Magnesiumoxid auch Wasserdampf und Chlorwasserstoff, welche zusammen mit dem von den Brennern 22 und 23 erzeugten Abgas aus dem Ofen 21 über die Leitung 19 abströmen. Dieses Abgas wird in einem Zyklon 18 von festen Bestandteilen getrennt und gelangt zunächst über eine Leitung 20 in den Wärmetauscher 16, der in Form eines Gaswäschers ausgebildet ist, und gibt in diesem einen Teil seines Wärmeinhalts sowie seinen aus Magnesiumoxid bestehenden Reststaubgehalt an die Magnesiumchloridsole ab. Nach dem Wärmetauscher 16 wird das Abgas über die Leitung 36 durch eine Absorptionskolonne 37 geleitet, in welcher der Chlorwasserstoff zur Bildung von Aufschlusssalzsäure aus dem Abgas ausgewaschen wird. Das solcherart gereinigte Abgas verlässt die Absorptionskolonne 37 durch die Abgasleitung 38, welche über ein Gebläse 39 zu einem Kamin 35 führt. Die in der Kolonne 37 gebildete Salzsäure gelangt über die Leitung 3 zum Aufschlussgefäss 1. In die Leitung 3 kann gewünschtenfalls ein (nicht gezeichneter) Sammelbehälter für die Salzsäure eingeschaltet sein.

Das vom Ofen 21 anfallende Magnesiumoxid wird mit einem Förderorgan 24 zu einer Verarbeitungsstation 25 geführt und dort verdichtet. Das solcherart gebildete Material, welches auch die Form von Formkörpern, z.B. Briketts, haben kann, wird sodann mittels einer Fördervorrichtung 26 einem Sinterofen 27 zugeführt, der mit Brennern 28, 29 beheizt ist. In der Zeichnung ist als Beispiel für einen Sinterofen ein Schachtofen angedeutet; es kann jedoch auch ein Drehrohrofen oder eine andere Sintereinrichtung verwendet werden. Das Abgas des Sinterofens 27 wird nach Entstaubung in einem Zyklon 30 über eine Leitung 31 einem Rauchgaswäscher 32 zugeleitet, dem als Waschflüssigkeit Fällungstrübe aus dem Behälter 6 über eine Leitung 9 zugeführt wird. Die gebrauchte Waschtrübe wird über eine Leitung 10 wieder in den Behälter 6 rückgeführt. Das im Rauchgaswäscher 32 gereinigte Rauchgas gelangt über eine Leitung 33 und ein Gebläse 34 in den Kamin 35.

Beispiel 1

Es wurde, wie vorstehend unter Bezugnahme auf die Zeichnung erläutert, Rohmagnesit mit einem Gehalt von 36 Gew.-% MgO und 4 Gew.-% FeO mit Salzsäure aufgeschlossen. Die nachstehenden Mengenangaben beziehen sich auf den Umsatz in jeweils einer Betriebsstunde und einen kontinuierlichen Prozess. Hiezu wurde in eine im Behälter 1 befindliche Magnesiumchloridtrübe zerkleinertes Magnesitmaterial mit einer Rate von 1349 kg/h eingetragen und Salzsäure mit einem Gehalt von 18,6 Gew.% HCl in einer Menge von 5377 kg/h zugesetzt. Entsprechend der Zufuhr von gemahlenem Magnesit und Salzsäure wurde fortlaufend Trübe in die nachfolgenden Behälter 4, 5 weitergeleitet, wo die Aufschlussreaktion ihre Fortsetzung fand. Nach Beendigung des Aufschlusses wurde die Trübe, welche eine Temperatur von 85 °C hatte, mit einer Rate von 6000 kg/h dem Behälter 6 zugeführt. Hier wurde die Trübe zum Ausfällen der Verunreinigungen mit 118 kg/h kaustisch gebranntem Magnesit als Fällungsmittel versetzt, wobei durch diese Fällungsmittelzugabe ein pH-Wert von 4 eingestellt wurde. Der Gehalt der Fällungstrübe an frisch gefälltem $Fe(OH)_3$ betrug 9 g/l. Gleichzeitig wurden aus dem Behälter 6 über die Leitung 9 11 $m^3$/h Fällungstrübe abgezogen, im Rauchgaswäscher 32 mit dem Abgas des Sinterofens 27, der in diesem Fall ein Schachtofen war, in innigen Kontakt gebracht und über die Leitung 10 wieder in den Behälter 6 zurückgeführt. Das Abgas des Sinterofens mit einer Menge von 2219 $Nm^3$/h wurde dabei von 200 °C in der Leitung 31 auf 65 °C in die Leitung 33 abgekühlt. Durch die dem Abgas des Schachtofens entzogene Wärmemenge wurden aus der für die Abgaswäsche verwendeten Magnesiumchloridtrübe 300 kg/h Wasser verdampft. Der $SO_2$-Gehalt des Schachtofenabgases wurde bei der Gaswäsche von 12 kg/h auf 1 kg/h abgesenkt und der HCl-Gehalt von ursprünglich 27 kg/h wurde praktisch vollständig ausgewaschen. Die ausgewaschenen Schadstoffmengen, nämlich 11 kg/h $SO_2$, welches durch Oxidation zu 14 kg/h $SO_3$ umgewandelt wurde, und 27 kg/h HCl wurden mit der durch die Leitung 10 ablaufenden Waschtrübe in den Behälter 6 und damit in den Prozess zurückgeführt. Zur Oxidation der Fe(II)-Ionen wurden in die Fällungsbehälter 6 und 11 in gleichmässigem Strom insgesamt 110 $m^3$/h Luft eingeblasen und durch die Rührwerke fein verteilt. Aus dem Schachtofen wurden 542 kg/h Sintermagnesia ausgetragen.

Beispiel 2

In diesem Beispiel dient Serpentin, ein im wesentlichen aus Magnesiumhydrosilikat bestehendes Gestein, als Magnesiumrohstoff. Die nachstehenden Mengenangaben beziehen sich auf jeweils eine Betriebsstunde und einen kontinuierlichen Prozess. Die folgende Verfahrensbeschreibung bezieht sich sich auf die gleiche Zeichnung wie beim Beispiel 1. Da der Kalkgehalt von Serpentin sehr gering ist, wird die Fällungsstufe 40 nicht betrieben.

Es wurde gemahlener Serpentin mit einer Rate von 1198 kg/h und Salzsäure mit einem HCl-Gehalt von 201 g HCl/l mit einer Rate von 5596 kg/h in den Behälter 1 eingetragen. Der Serpentin hatte folgende Zusammensetzung:

| | |
|---|---|
| Glühverlust | 10,4 Gew.-% |
| $SiO_2$ | 38,8 Gew.-% |
| $Fe_2O_3$ | 7,8 Gew.-% |
| MgO | 41,5 Gew.-% |
| Rest | 1,5 Gew.-% |

Der Aufschluss des Serpentinmaterials erfolgte kontinuierlich in den Behältern 1, 4 und 5. Der Überlauf des Behälters 5 mit einer Menge von 6394 kg/h gelangte in den Behälter 6, wo die Aufschlusstrübe durch Zugabe von 102 kg/h Magnesiumoxid in Form von kaustisch gebranntem Magnesit auf einen pH-Wert von etwa 4 gebracht wurde. Die vollständige Neutralisierung der Aufschlusstrübe und Ausfällung der Fe-, Mn-, Al- und Ni-Ionen als Hydroxide erfolgte unter Rührkesselkaskade. Aus dem Fällungsbehälter 6 wurden kontinuierlich 11 $m^3$/h Trübe mit einem Gehalt von 29 g/l an frisch gefälltem Fe(OH)$_3$ abgezogen, zum Rauchgaswäscher 32 geführt und dort in innigen Kontakt mit dem Abgas des Sinterofens 27 gebracht. Der Ablauf des Rauchgaswäschers 32 lief kontinuierlich in den Behälter 6 zurück. Das Abgas des Sinterofens mit einer Menge von 2219 Nm$^3$/h wurde dabei von 200 °C in der Leitung 31 auf 65 °C in der Leitung 33 abgekühlt. Durch die dem Abgas des Sinterofens entzogene Wärmemenge wurden aus der für die Abgaswäsche verwendeten Trübe 300 kg/h Wasser verdampft. Das Sinterofenabgas enthielt vor seinem Eintritt in den Wäscher 32 27 kg/h HCl und kein SO$_2$, nach der Gaswäsche lag der HCl-Gehalt unter 30 mg/Nm$^3$. Der ausgewaschene HCl wurde in einer Menge von 27 kg/h mit der durch die Leitung 10 abfliessenden Waschtrübe in den Behälter 6 und damit in den Prozess zurückgeführt. Zur Oxidation der Fe(II)-Ionen wurden in die Fällungsbehälter 6 und 11 in gleichmässigem Strom insgesamt 115 m$^3$/h Luft eingeblasen und durch die Rührwerke fein verteilt. Aus dem Sinterofen wurden 542 kg/h Sintermagnesia ausgetragen.

Die Erfindung ist nicht auf die in der Zeichnung und den Beispielen dargestellten Ausführungsformen beschränkt.

So ist es nicht unbedingt erforderlich, dass die beiden dargestellten Rührkesselkaskaden, nämlich die Aufschlusskaskade mit den Behältern 1, 4 und 5 und die Fällungskaskade mit den Behältern 6 und 11, gerade drei bzw. zwei Rührkessel aufweisen, die Anzahl der Behälter pro Kaskade kann vielmehr auch erhöht oder vermindert werden. Es ist auch möglich, nur jeweils einen Behälter für die Aufschluss- und Fällungsstufe zu verwenden. Bei diskontinuierlichem Betrieb kann die Aufschluss- und die Fällungsreaktion auch in einem einzigen Gefäss durchgeführt werden.

Im Sinne der in der AT-B 357 138 beschriebenen Verfahrensweise ist es auch möglich, sowohl die Calciumsulfatfällung als auch die Hydroxidfällung an der konzentrierten Lösung in der Fällungs- und Abtrennungsstation 40 vorzunehmen. In diesem Fall verbindet man den Überlauf des Behälters 5 direkt mit der Leitung 15 und verlegt die Behälter 6 und 11 samt ihren Zu- und Ableitungen einschliesslich der zum bzw. vom Rauchgaswäscher 32 führenden Leitungen 9 und 10 in die Fällungs- und Abtrennungsstation 40. In dieser kann dann auch die Abtrennung aller gebildeten Niederschläge gemeinsam erfolgen.

**Patentansprüche**

1. Verfahren zur Herstellung von Sintermagnesia aus Magnesiumoxid, welches seinerseits durch thermische Zerlegung einer Magnesiumchloridsole gebildet wird, die ihrerseits durch Lösen mangesiumhaltiger Ausgangsstoffe in Salzsäure und anschliessendes Aufarbeiten der durch den Löseprozess gebildeten Magnesiumchloridtrübe bereitet wird, dadurch gekennzeichnet, dass das Abgas des Sinterofens vor dem Ableiten in die Umgebung einer reinigenden Wäsche mit einer suspendiertes Fe(OH)$_3$ enthaltenden Magnesiumchloridtrübe unterworfen wird, die der zur Bereitung der Magnesiumchloridsole dienenden Menge an Magnesiumchloridtrübe entnommen wird, und dass die gebrauchte Waschtrübe wieder der zur Bereitung der Magnesiumchloridsole dienenden Menge an Magnesiumchloridtrübe beigegeben wird.

2. Verfahren nach Anspruch 1, dadurch gekennzeichnet, dass eine Magnesiumchloridtrübe mit einem zwischen 10 und 70 g/l liegenden Gehalt an frisch gefälltem Fe(OH)$_3$ verwendet wird.

3. Verfahren nach Anspruch 1 oder 2, dadurch gekennzeichnet, dass zum Waschen des Abgases eine Magnesiumchloridtrübe verwendet wird, der bereits zum Herstellen eines für das Ausfällen der Verunreinigungen günstigen pH-Wertes eine die Acidität der Trübe vermindernde Substanz zugesetzt worden ist, in der die Verunreinigungen aber noch enthalten sind.

4. Verfahren nach Anspruch 3, dadurch gekennzeichnet, dass die zum Waschen des Abgases dienende Magnesiumchloridtrübe dem zum Fällen der Verunreinigungen dienenden Behälter entnommen und nach Gebrauch wieder in diesen Behälter rückgeführt wird.

5. Verfahren nach einem der Ansprüche 1 bis 4, dadurch gekennzeichnet, dass in die zum Waschen des Abgases vorgesehene Magnesiumchloridtrübe Luft eingeblasen wird.

6. Verfahren nach einem der Ansprüche 1 bis 5, dadurch gekennzeichnet, dass der pH-Wert der zum Waschen des Abgases vorgesehenen Magnesiumchloridtrübe auf einen zwischen 3,5 und 7 liegenden Wert eingestellt wird.

**Revendications**

1. Procédé de production de magnésie frittée à partir d'oxyde de magnésium qui, de son côté, est formé par la décomposition thermique d'une saumure de chlorure de magnésium qui, à son tour, est préparée par la dissolution de matières de départ contenant du magnésium dans de l'acide chlorhydrique et par traitement subséquent du liquide boueux de chlorure de magnésium formé par le processus de dissolution, caractérisé en ce que le gaz résiduaire du four de frittage est soumis avant décharge dans l'atmosphère à un lavage purificateur avec un liquide boueux de chlorure de magnésium contenant du Fe(OH)$_3$ en suspension, et qui est prélevé de la quantité de liquide boueux de chlorure de magnésium servant à préparer la saumure de chlorure de magnésium, et en ce que le liquide boueux de lavage utilisé est ajouté à nouveau à la quantité de liquide boueux de chlorure de magnésium servant à préparer la saumure de chlorure de magnésium.

2. Procédé selon la revendication 1, caractérisé en ce qu'on utilise un liquide boueux de chlorure de magnésium ayant une teneur en Fe(OH)$_3$ fraîchement précipité allant de 10 à 70 g/l.

3. Procédé selon la revendication 1 ou la revendication 2, caractérisé en ce que, pour laver le gaz résiduaire on utilise un liquide boueux de chlorure de magnésium auquel a déjà été ajoutée une substance réduisant l'acidité du liquide boueux pour établir une valeur de pH favorisant la précipitation des impuretés, les impuretés y étant cependant encore contenues.

4. Procédé selon la revendication 3, caractérisé en ce que la liquide boueux de chlorure de magnésium servant à laver le gaz résiduaire est prélevé du récipient servant à précipiter les impuretés et, après emploi, est à nouveau recyclé dans ce récipient.

5. Procédé selon l'une des revendications 1 à 4, caractérisé en ce qu'on insuffle de l'air dans le liquide boueux de chlorure de magnésium prévu pour laver le gaz résiduaire.

6. Procédé selon l'une des revendications 1 à 5, caractérisé en ce que le pH du liquide boueux de chlorure de magnésium prévu pour laver le gaz résiduaire est réglé à une valeur allant de 3,5 à 7.

## Claims

1. A process of preparing sinter magnesia from magnesium oxide, the magnesium oxide being prepared by the thermal decomposition of a magnesium chloride sol made up by dissolving magnesium-containing starting materials in hydrochloric acid and subsequently working up the magnesium chloride slurry produced by the dissolving procedure, characterized in that the flue gas of the sintering kiln before removal thereof to the atmosphere is subjected to a purifying washing with a magnesium chloride slurry containing $Fe(OH)_3$ suspended therein, said slurry being withdrawn from the amount of magnesium chloride slurry used for the preparation of the magnesium chloride sol and that the utilized washing slurry is recycled to the amount of magnesium chloride slurry used for the preparation of the magnesium chloride sol.

2. The process of claim 1, characterized in that a magnesium chloride slurry containg between 10 and 70 g/l of freshly precipitated $Fe(OH)_3$ is used.

3. The process of claim 1 or 2, characterized in that for washing the flue gas a magnesium chloride slurry is used to which a substance decreasing the acidity of the slurry has been added so as to obtain a pH-value favourable for the precipitation of impurities, but in which slurry impurities are still contained.

4. The process of claim 3, characterized in that the magnesium chloride slurry for washing the flue gas is withdrawn from the vessel for precipitation of the impurities and recycled after use into said vessel.

5. The process of one of claims 1 to 4, characterized in that air is blown into the magnesium chloride slurry for washing the flue gas.

6. The process of one of claims 1 to 5, characterized in that the pH-value of the magnesium chloride slurry for washing the flue gas is adjusted to a value between 3,5 and 7.

0 052 093

1/1